# DEMANDE DE BREVET EUROPEEN

(11) **EP 1 958 822 A1**
(43) Date de publication de la demande: **20.08.2008**
(21) Numéro de dépôt: 08300088.5
(22) Date de dépôt: 12.02.2008
(51) Int. Cl.: B60R 7/04, B60N 3/10

(54) **Dispositif de rangement pour porte de vehicule automobile**

(30) Priorité: 16.02.2007 FR 0753315
(71) Demandeur: Renault S.A.S., 92100 Boulogne-Billancourt (FR)
(72) Inventeur: Doneux, Thibault, 92100, BOULOGNE BILLANCOURT (FR)

(57) **Abrégé**

Le dispositif comprend au moins deux bacs superposés (1) et (2) montés avec capacité de déplacement guidé en hauteur pour occuper plusieurs positions les uns par rapport aux autres, depuis une position jointive jusqu'à une position écartée les uns des autres.

## Description

L'invention se rattache au secteur technique des dispositifs de rangement pour porte de véhicule automobile.

Il est notoirement connu, pour un homme du métier, d'aménager les portes de véhicules, notamment leur intérieur, avec des agencements divers faisant office de rangement pour des produits quelconques. Ces agencements se présentent, le plus souvent, sous forme de bacs disposés, par exemple, en partie basse de la portière ou, parfois, combinés avec une partie faisant office d'accoudoir. Dans la plupart des cas, les bacs de rangement sont ouverts, de sorte que les produits disposés à l'intérieur peuvent être visibles attirant, par conséquent, le regard et entraînant ainsi des risques d'effraction. Certains de ces bacs peuvent être équipés d'un couvercle articulé dont la manipulation n'est pas toujours aisée. Par ailleurs, en position fermée du couvercle, la capacité de rangement est réduite.

Une solution ressort, par exemple, de l'enseignement du brevet US-A-6196606 qui décrit un bac de rangement agencé sur un panneau de porte. Ce bac présente des ouvertures afin de laisser visibles les objets qu'il contient, ce qui peut, comme indiqué précédemment, entraîner des risques d'effraction du véhicule. On observe également le manque d'accessibilité notamment dans le cas d'un véhicule utilitaire.

L'invention s'est fixée pour but de remédier à ces inconvénients d'une manière simple, sûre, efficace et rationnelle.

Le problème que se propose de résoudre l'invention est d'avoir la possibilité de dissimuler les objets à la vue des personnes extérieures au véhicule, de pouvoir augmenter la capacité de rangement et de pouvoir assurer un réglage, afin de permettre une meilleure accessibilité, notamment pour le conducteur.

Pour résoudre un tel problème, il a été conçu et mis au point, selon l'invention, un dispositif comprenant au moins deux bacs superposés montés avec capacité de déplacement guidé en hauteur pour occuper plusieurs positions les uns par rapport aux autres, depuis une position jointive jusqu'à une position écartée les uns des autres.

Dans une forme de réalisation avantageuse, l'un des bacs est fixe, l'autre (ou les autres) est (sont) mobile(s). Le bac fixe est situé à la partie inférieure de la garniture intérieure de la porte.

A partir de cette conception de base, différents formes de réalisation peuvent être envisagées.

Par exemple :
- le (ou les bacs) mobile(s) présente(nt) un fond ;
- le fond du ou des bacs mobile(s) présente des agencements pour le passage et le maintien d'objets disposés dans le bac inférieur fixe.

Pour résoudre le problème posé de pouvoir modifier, à volonté, le positionnement relatif des bacs superposés, le ou les bacs mobile(s) est (sont) monté(s) avec capacité de coulissement guidé par rapport au bac fixe, à l'encontre des glissières que présente la garniture de porte.

Avantageusement, la ou les bacs mobile(s) est (sont) monté(s) avec capacité de coulissement guidé et de blocage automatique en position.

Dans une autre forme de réalisation, le bac mobile supérieur présente un couvercle.

L'invention est exposée ci-après plus en détail à l'aide des figures des dessins annexés dans lesquels :
- la figure 1 est une vue en perspective montrant un panneau de porte du véhicule automobile équipé du dispositif de rangement selon l'invention, en position écartée des bacs ;
- la figure 2 est une vue en perspective correspondant à la figure 1, en position superposée et jointive des bacs.

On a illustré, aux figures des dessins, une porte de véhicule automobile dont la garniture intérieure ou panneau (P) est équipé du dispositif de rangement selon l'invention. Ce dispositif comprend au moins deux bacs superposés (1) et (2).

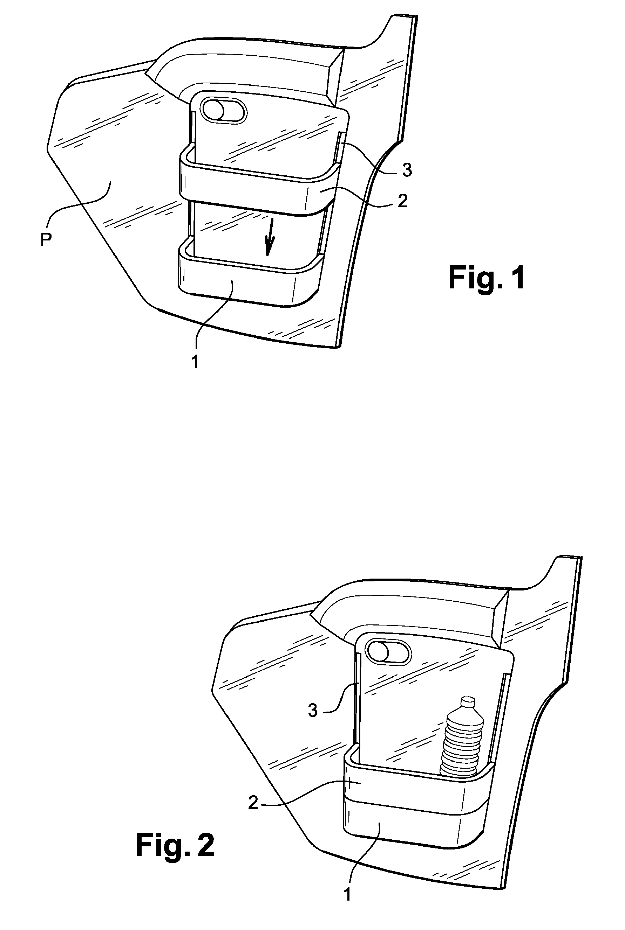

Dans l'exemple illustré, le dispositif comprend deux bacs montés, par rapport au panneau (P), avec capacité de déplacement guidé en hauteur, pour occuper plusieurs positions l'un par rapport à l'autre. Notamment, les deux bacs (1) et (2) peuvent être superposés, d'une manière jointive (figure 2), ou écartés l'un de l'autre selon une distance variable (figure 1).

Dans une forme de réalisation, la position du bac supérieur (2) est réglable en hauteur par rapport à celle du bac (1) situé à la partie inférieure du panneau et qui est fixe.

Sans pour cela sortir du cadre de l'invention, on n'exclut pas le fait que les deux bacs (1) et (2) soient l'un et l'autre montés avec capacité de réglage en hauteur.

Le ou les bacs (1) et (2) présentent des agencements pour être montés avec capacité de coulissement guidé et de blocage automatique en position dans des glissières (3) que présente le panneau (P) de porte.

Le ou les bacs mobiles (2) peuvent présenter ou non un fond (2a). Dans cette hypothèse, ce fond (2a) peut présenter des agencements pour le passage et le maintien d'objets tels que bouteilles disposées dans le bac inférieur fixe (1). Les agencements peuvent consister en un ou plusieurs orifices ménagés dans le fond (2a). Le fond du bac supérieur peut également présenter un rebord afin de faire tenir, dans la partie haute, un objet posé dans le bac inférieur.

A partir de cette conception de base, différentes variantes d'exécution peuvent être prévues. Par exemple, le bac mobile supérieur (2) peut présenter un couvercle. De même, chacun des bacs (1) et (2), ou l'un seulement d'entre eux, peut être compartimenté.

L'invention trouve une application particulièrement avantageuse pour tout type de véhicule en étant susceptible d'équiper les portes avant et/ou arrière et trouve une application avantageuse dans le cas de véhicule utilitaire.

Les avantages ressortent bien de la description, en particulier on souligne et on rappelle :
- la possibilité de dissimuler des objets à la vue des personnes extérieures au véhicule, lorsque le bac supérieur mobile est positionné au-dessus du bac fixe inférieur, en faisant ainsi office de couvercle ;
- la possibilité de régler en hauteur le bac supérieur pour qu'il soit plus accessible pour le conducteur ;
- la simplicité de réalisation ;
- les différentes possibilités d'utilisation et de rangement.

## Revendications

1. Dispositif de rangement pour porte de véhicule automobile, **caractérisé en ce qu'**il comprend au moins deux bacs superposés (1) et (2) montés avec capacité de déplacement guidé en hauteur pour occuper plusieurs positions les uns par rapport aux autres, depuis une position jointive jusqu'à une position écartée les uns des autres, l'un des bacs (1) est fixe, l'autre (2) (ou les autres) est (sont) mobile(s), le ou les bacs mobile(s) (2) est (sont) monté(s) avec capacité de coulissement guidé par rapport au bac fixe, à l'encontre de glissières (3) que présente la garniture de porte.

2. Dispositif selon la revendication 1, **caractérisé en ce que** le bac fixe (1) est situé à la partie inférieure de la garniture intérieure de la porte.

3. Dispositif selon la revendication 1, **caractérisé en ce que** le (ou les bacs) mobile(s) (2) présente(nt) un fond.

4. Dispositif selon la revendication 3, **caractérisé en ce que** le fond du ou des bacs mobile(s) (2) présente des agencements pour le passage et le maintien d'objets disposés dans le bac inférieur fixe (1).

5. Dispositif selon la revendication 1, **caractérisé en ce que** le ou les bacs mobile(s) (2) est (sont) inonté(s) avec capacité de coulissement guidé et de blocage automatique en position.

6. Dispositif selon la revendication 1, **caractérisé en ce que** le bac mobile supérieur (2) présente un couvercle.

7. Dispositif selon la revendication 1, **caractérisé en ce que** les différents bacs (1) et (2) sont mobiles en position.
